# EUROPEAN PATENT APPLICATION

(11) **EP 4 764 078 A1**
(43) Date of publication of application: **24.06.2026**
(21) Application number: 25224921.4
(22) Date of filing: 18.12.2025
(51) Int. Cl.: E01F 13/00, E04F 11/18, F16B 9/00, F16B 13/14

(54) **RESPECT BARRIER FOR A MUSEUM ENVIRONMENT**

(30) Priority: 19.12.2024 IT 202400029229
(71) Applicant: Goppion S.p.A., 20090 Trezzano sul Naviglio (MI) (IT)
(72) Inventor: GOPPION, Alessandro, I-20144 Milano (IT)
(74) Representative: Checcacci, Giorgio

(57) **Abstract**

The respect barrier to prevent the public from getting too close to an object on display in a museum environment, comprising at least one main bar (11), at least one secondary bar (12) anchored to the main bar (11), and a fastening assembly (20) for fastening the secondary bar (23) to a wall (P). The secondary bar (12) comprises a tubular end portion (13) with at least one through-hole (14). The fastening assembly (20) comprises a fixing plug (21) to be fastened to the wall (P), a tang (23) fastened to the fixing plug (21) and protruding from the wall (P), on which tang (23) the tubular end portion (13) is inserted. The end of the tubular end portion (13) of the secondary bar (12) rests on a flange (26) transversally protruding from the tang (23). A threaded hole (27) is transversally formed in the tang (23) and a screw (28) is inserted into the through-hole (14) and engaged by screwing into the threaded hole (27). Prior to mounting the secondary bar (12) on the tang (23), the distance between the threaded hole (27) and the flange (26) is lower than the distance between the through-hole (14) and the end of the tubular end portion (13) of the secondary bar (12).

## Description

In museums, and in general in environments where valuable objects are on display, there is the problem of protecting the objects on display appropriately, both allowing the public to enjoy the objects and preventing the objects from being damaged.

One display method that is often adopted, particularly, but not exclusively, for paintings, provides for the object to be placed adjacent to a wall, hung or possibly placed on a suitable support. A respect barrier is then mounted in front of the object on display, typically a bar or a taut cable, which - while not preventing the public from approaching the object - provides the public with a clear indication of the minimum distance at which it is possible to approach it without compromising the safety of the object on display. The protection of the object, particularly if it is of great value, can then be supplemented by sensors that send an alarm signal in the event that someone from the public gets too close to the object, exceeding or even touching the barrier.

A respect barrier must be highly solid, to avoid the risk of it collapsing or being damaged in the event of impact by the public; furthermore, a respect barrier that collapses could impact with the objects on display, damaging them. Since those who enter these environments have a particular aesthetic sensitivity, it is important that the solidity of the respect barrier does not have a strong aesthetic impact such as to capture and distract the attention of the public, thus disturbing the enjoyment of the objects on display.

The aim of the present invention is therefore to make available a respect barrier that ensures the necessary solidity and has minimal aesthetic impact.

This aim is achieved by a respect barrier according to claim 1; preferred characteristics are referred to in the dependent claims.

More specifically, the respect barrier comprises at least one main bar, at least one secondary bar anchored to the main bar, and a fastening assembly for fastening the secondary bar to a wall.

The secondary bar comprises a tubular end portion extending along a mounting axis at an end of the secondary bar remote from the main bar, and at least one through-hole made in the tubular end portion transverse to the mounting axis.

The fastening assembly comprises:
- a fixing plug, adapted to be firmly fastened within a hole made in the wall,
- a tang, fastened on the fixing plug and protruding from the wall, extending along the mounting axis, on which tang the tubular end portion of the secondary bar is inserted,
- a flange protruding from the tang transverse to the mounting axis at one end thereof adjacent to the fixing plug, on which flange the end of the tubular end portion of the secondary bar rests axially,
- at least one threaded hole, made in the tang transverse to the mounting axis,
- a screw, inserted into the through-hole and engaged by screwing into the threaded hole.

Prior to mounting the secondary bar on the tang, the distance in the direction of the mounting axis between the threaded hole and the flange is lower than the distance in the direction of the mounting axis between the through-hole and the end of the tubular end portion of the secondary bar.

Thanks to its fastening assembly, such a barrier is extremely solid. In fact, the secondary bar is simply but very strongly fastened on the tang; the mutual position of the threaded hole and the through-hole is such that the insertion of the screw with which the secondary bar is fastened to the tang causes the secondary bar to be forced axially against the flange of the tang, thus ensuring a very solid and strong coupling, far greater than that which could be obtained if these two holes were simply aligned. Furthermore, the solidity of the coupling is obtained with very little visible elements and such as not to disturb the enjoyment of the objects on display protected by the respect barrier.

Preferably, the difference between the distance in the direction of the mounting axis between the threaded hole and the flange and the distance in the direction of the mounting axis between the through-hole and the end of the tubular end portion of the secondary bar is between 0.3 times and 0.8 times the diameter of the screw; more preferably it is equal to 0.5 times the diameter of the screw.

This difference makes it possible to obtain very good forcing and therefore very good fastening solidity, but without making it difficult to fit the screws.

Preferably, the screw has a pointed end.

The pointed end facilitates insertion of the screw into the threaded hole, even in the case of misalignment.

Preferably, the through-hole has a conical mouth and the screw has a conical head.

Thus, the screw remains recessed and little visible. Preferably, the threaded hole and the through-hole are oriented downwards with respect to the mounting axis, thus making the screw substantially invisible.

Preferably, the through holes are at least two, the threaded holes are at least two and the screws are at least two.

Although one screw may be sufficient, the presence of two or more screws increases the solidity of the fastening.

Preferably, the cross-section of the tubular end portion of the secondary bar corresponds to the cross-section of the tang, so that the tubular end portion of the secondary bar is inserted without clearance on the tang.

The lack of clearance between the tang and the tubular end of the secondary bar contributes to the solidity of the fastening.

Preferably, the fixing plug is a chemical-type fixing plug.

A chemical-type fixing plug allows for a very strong anchorage to the wall, capable of withstanding high stresses without the risk of moving into the hole in the wall or, worse, of getting out of the hole.

Preferably, the tang is fixed to the fixing plug by means of a screw passing through an axial hole in the tang and engaged by screwing in an axial hole in the fixing plug.

Thus, the tang is firmly fastened to the wall by the fixing plug and can in turn provide a solid fastening for the secondary bar.

Further characteristics and advantages of the invention will be more evident from the following description of a preferred embodiment thereof, made with reference to the appended drawings: in these drawings:
- Figure 1 is an overall view of a respect barrier according to the invention;
- Figure 2 is a sectional view of the respect barrier of Figure 1 applied to a wall;
- Figure 3 is a sectional view of an end portion of a secondary bar of Figure 1 of the respect barrier fastened to a wall;

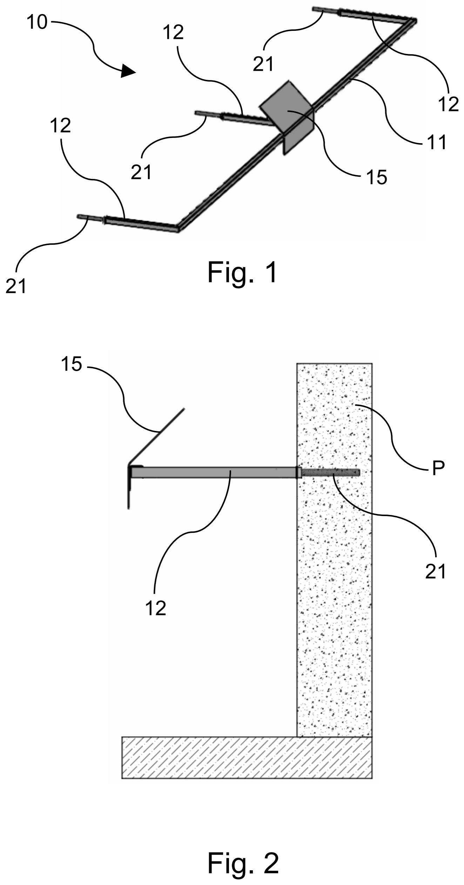

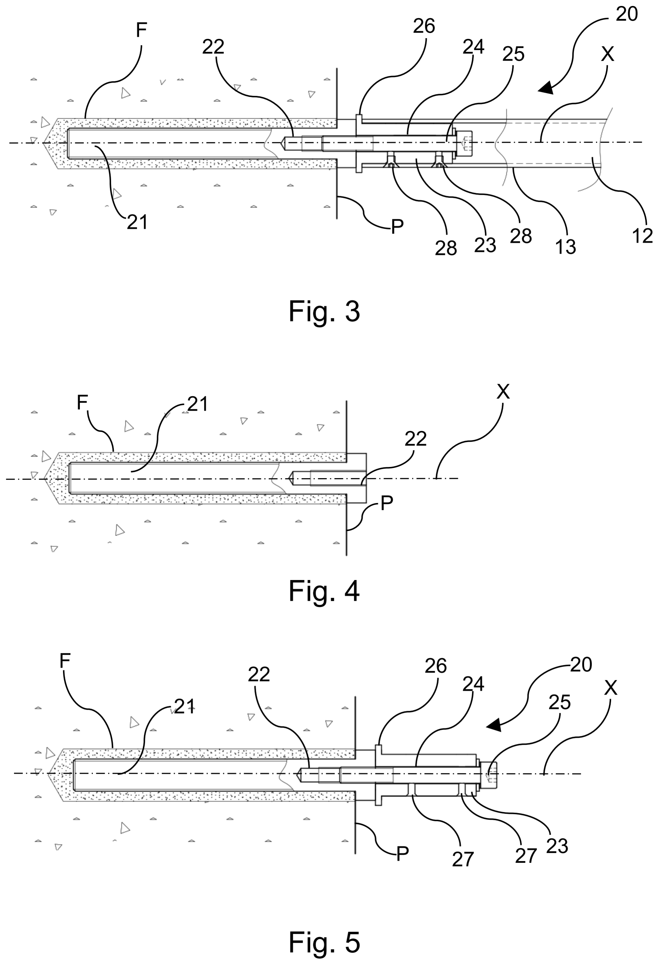

- Figures 3 to 6 show successive steps of the fastening of the respect barrier of Figure 1 to the wall;

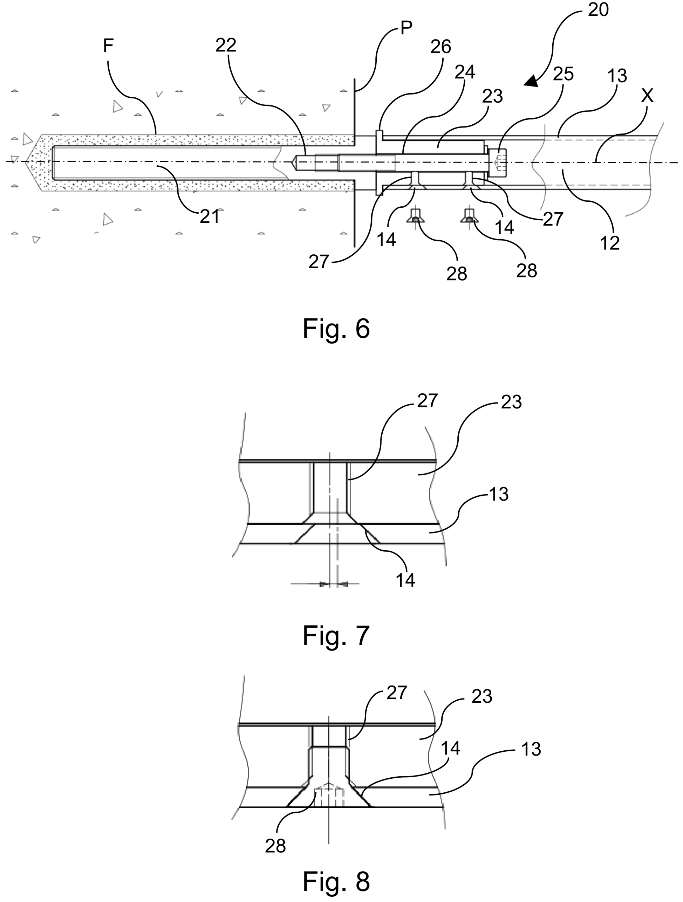

- Figures 7 and 8 show, on an enlarged scale, a detail of the respect barrier of Figure 1, respectively during and at the end of the mounting.

In the Figures, **10** is used to globally denote a respect barrier applied to a wall **P** on which (or near which) one or more objects to be protected are on display, such as a painting. The respect barrier 10 comprises a main bar **11** and some secondary bars **12.** The secondary bars 12 are anchored at one end to the main bar 11, e.g. by welding or by means of a mechanical joint; at the other end, remote from the main bar 11, the secondary bars 12 are fastened to the wall P by means of a fastening assembly **20,** as described hereinafter.

Each secondary bar 12 comprises a tubular end portion **13,** at its remote end from the main bar 11; optionally, the entire secondary bar 12 may be tubular. The tubular end portion 13 is substantially rectilinear and extended along a mounting axis **X.** Preferably, the entire secondary bar 12 is rectilinear and extended along the mounting axis X, but it is also possible that the portion of the secondary bar 12 other than its tubular end portion 13 is extended differently (e.g., curved or inclined), depending on the specific requirements with respect to the objects on display and also on the aesthetic preferences of the person in charge of the setting-up. The tubular end portion 13 may have any section; typically, circular or square sections are preferred, as they are easier to manufacture.

In the tubular end portion 13, at least one through-hole, preferably several through-holes **14,** are formed in the direction transverse to the mounting axis X; in the example shown in the figures, two of these through-holes 14 are provided. The through-holes 14 are preferably formed on the lower side of the tubular end portion 13, so as to be little visible once the respect barrier 10 is mounted on the wall P, at a height compatible with its use in order to represent an obstacle to people approaching the objects on display, e.g. between 50 and 150 cm from the ground.

A plate **15,** applied to the main bar 11 (as shown in Figures 1 and 2) or to the secondary bars 12, can be provided to carry information and indications on the objects on display to the benefit of the public.

The fastening assembly 20 comprises a fixing plug **21** of the type adapted to be firmly fastened in a hole **F** formed in the wall P. Depending on the structure of the wall P, the most suitable type of fixing plug 21 may be chosen; in the case of a wall P in masonry, a fixing plug 21 of the so-called chemical type may be advantageously used, in which adhesion to the hole F is ensured by a (typically two-component) resin that is injected in liquid form and solidifies in the hole F, anchoring permanently and particularly strongly the fixing plug 21 to the wall P. An axial hole **22** is formed in the fixing plug 21, open towards the outside of the wall P once the fixing plug 21 is fastened in the hole F.

The fastening assembly 20 then comprises a tang **23,** which is fastened to the fixing plug 21 so as to protrude from the wall P and extend along the mounting axis X. To this end, the tang 23 is provided with an axial pass-through hole **24** into which a tang screw **25** is inserted, which engages in the axial hole 22 of the fixing plug 21, so as to securely fasten the tang 23 to the fixing plug 21.

At its end adjacent to the fixing plug 21, the tang 23 is provided with a flange **26,** which protrudes from the tang 23 transverse to the mounting axis X.

The tubular end portion 13 is inserted onto the tang 23; therefore, the section of the tang 23 is of a corresponding shape, adapted to receive the tubular end portion 13 without clearance.

Threaded holes **27** are formed on the tang 23, transverse to the mounting axis X, in a number corresponding to the through-holes 14 formed on the tubular end portion 13. The position of the threaded holes 27 -prior to mounting the secondary bar 12 on the tang 23- is approximately the same as that of the through-holes 14. More precisely, each through-hole 14 corresponds to one of the threaded holes 27 which is in the same angular position with respect to the mounting axis X and which -in the direction of the mounting axis X- occupies a misaligned position, such that the distance between the threaded hole 27 and the flange 26 is lower than the distance between the through-hole 14 and the end of the tubular end portion 13 of the secondary bar 12.

The fastening assembly 20 then comprises screws **28,** each of which is inserted into one of the through-holes 14 and screwed into the corresponding threaded hole 27. Due to the difference in the distances indicated above, the forced screwing of the screws 28 during the step of mounting the respect barrier 10 generates a thrust on the tubular end portion 13 that forces it in the direction of the mounting axis X against the flange 26.

The misalignment of the through holes 14 with respect to the threaded holes 27 is small, as small is the difference between the distance between the threaded hole 27 and the flange 26 and the distance between the through-hole 14 and the end of the tubular end portion 13 of the secondary bar 12, so as to allow the screws 28 inserted in the through-holes 14 to be also inserted in the threaded holes 27, albeit with some effort. This difference is preferably between 0.1 and 0.8 times the diameter of the screws 28, more preferably approximately 0.2 times the diameter of the screws 28.

In addition, to facilitate the insertion of the screws 28 into the threaded holes 27, the screws 28 can have pointed ends. In order to make the screws 28 as little visible as possible, they may have a conical head and the through-holes 14 may have a corresponding conical mouth.

The forcing of the tubular end portion 13 in the direction of the mounting axis X, obtained by the misalignment of the through holes 14 with respect to the threaded holes 27, ensures both that each secondary bar 12 is firmly anchored to the wall P, and that all the secondary bars 12 are perfectly positioned at the same minimum distance from the wall P, predetermined by the flanges 26. In addition, the secondary bars 12 never rest on, let alone press against, the surface of the wall P, which is therefore in no danger of being damaged in any way; any strain on the respect barrier 10 is transferred to the inside of the wall P exclusively through the fastening assembly 20, i.e. in particular through the tang 23 and the fixing plug 21.

Therefore, in the event of even relatively strong impacts on the respect barrier 10, e.g. by distracted members of the public, not only is the respect barrier 10 able to resist, but it also does not cause any damage to the surface of the wall P.

## Claims

1. Respect barrier preventing public from getting too close to an object on display in a museum environment, comprising at least one main bar (11), at least one secondary bar (12) anchored to the main bar (11), and a fastening assembly (20) for fastening the secondary bar (23) to a wall (P),
**characterised in that**
the secondary bar (12) comprises:
- a tubular end portion (13) extending along a mounting axis (X) at an end of the secondary bar (12) remote from the main bar (11),
- at least one through-hole (14) made in the tubular end portion (13) transverse to the mounting axis (X);
**in that**
the fastening assembly (20) comprises:
- a fixing plug (21), adapted to be firmly fastened within a hole (F) made in the wall (P),
- a tang (23), fastened on the fixing plug (21) and protruding from the wall (P), extending along the mounting axis (X), on which tang (23) the tubular end portion (13) of the secondary bar (12) is inserted
- a flange (26) protruding from the tang (23) transverse to the mounting axis (X) at one end thereof adjacent to the fixing plug (21), on which flange (26) the end of the tubular end portion (13) of the secondary bar (12) rests axially,
- at least one threaded hole (27), made in the tang (23) transverse to the mounting axis (X),
- a screw (28), inserted into the through-hole (14) and engaged by screwing into the threaded hole (27);
**and in that**
prior to mounting the secondary bar (12) on the tang (23), the distance in the direction of the mounting axis (X) between the threaded hole (27) and the flange (26) is lower than the distance in the direction of the mounting axis (X) between the through-hole (14) and the end of the tubular end portion (13) of the secondary bar (12).

2. Respect barrier according to claim 1, wherein the difference between the distance in the direction of the mounting axis (X) between the threaded hole (27) and the flange (26) and the distance in the direction of the mounting axis (X) between the through-hole (14) and the end of the tubular end portion (13) of the secondary bar (12) is between 0.3 times and 0.8 times the diameter of the screw (28).

3. Respect barrier according to claim 2, wherein the difference is approximately 0.5 times the diameter of the screw (28).

4. Respect barrier according to claim 1, wherein the screw (28) has a pointed end.

5. Respect barrier according to claim 1, wherein the through-hole (14) has a conical mouth and the screw (28) has a conical head.

6. Respect barrier according to claim 1, wherein the through-holes (14) are at least two, the threaded holes (27) are at least two and the screws (28) are at least two.

7. Respect barrier according to claim 1, wherein the cross section of the tubular end portion (13) of the secondary bar (12) corresponds to the cross section of the tang (23), so that the tubular end portion (13) of the secondary bar (12) is inserted without clearance on the tang (23).

8. Respect barrier according to claim 1, wherein the fixing plug (21) is a chemical-type fixing plug.

9. Respect barrier according to claim 1, wherein the tang (23) is fastened to the fixing plug (21) by means of a tang screw (25) passing through an axial hole (24) in the tang (23) and engaged by screwing in an axial hole (22) in the fixing plug (21).
